# EUROPÄISCHE PATENTSCHRIFT

(11) **EP 2 770 484 B1**
(45) Veröffentlichungstag und Bekanntmachung des Hinweises auf die Patenterteilung: **12.10.2016**
(21) Anmeldenummer: 14164044.1
(22) Anmeldetag: 03.08.2007
(51) Int. Cl.: G07F 7/10

(54) **Lesegerät für ein Dokument, Verfahren zum Lesen eines Datenobjekts und Computerprogrammprodukt**
Reader for a document, method for reading a data object and computer program product
Appareil de lecture d'un document, procédé de lecture d'un objet de données et produit de programme informatique

(30) Priorität: 11.08.2006 DE 102006037879
(43) Veröffentlichungstag der Anmeldung: 27.08.2014
(62) Teilanmeldung aus: 07788202.5
(73) Patentinhaber: Bundesdruckerei GmbH, 10969 Berlin (DE)
(72) Erfinder: Freytag, Claus, 10587 Berlin (DE); Fröhlich, Martin, 13088 Berlin (DE); Nguyen, Kim, 10437 Berlin (DE); Osterode, Gunnar, 10711 Berlin (DE)
(74) Vertreter: Richardt Patentanwälte PartG mbB

(56) Entgegenhaltungen:
- EP-A- 1 577 824
- EP-A- 1 630 639
- EP-A- 1 635 302
- WO-A-97/22092
- FR-A- 2 765 985
- GB-A- 2 354 612
- US-A- 5 825 875
- US-A1- 2004 247 118

## Beschreibung

Die vorliegende Patentanmeldung ist eine Teilanmeldung der Stammanmeldung EP07788202.5 deren Offenbarungsgehalt hiermit durch Bezugnahme vollinhaltlich zum Offenbarungsgehalt der vorliegenden Teilanmeldung gemacht wird.

Die Erfindung betrifft ein Lesegerät für ein Dokument, insbesondere ein Wert- oder Sicherheitsdokument, sowie ein Verfahren zum Lesen eines Datenobjekts aus einem Datenspeicher eines solchen Dokuments und ein Computerprogrammprodukt.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als so genannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Banknoten und Ausweisdokumenten, integriert.

US 5825875 beschreibt ein Verfahren zum Laden eines geschützten Speicherbereiches eines ersten Datenträgers, welcher vertrauliche Daten oder Programme enthält, in einen geschützten Speicherbereich eines Transfermoduls, welches mit einem Informationsverarbeitungsgerät verbunden ist. Der geschützte Speicherbereich des ersten Datenobjekts kann von einer Datenverarbeitungskomponente des Moduls nach Aufbau einer sicheren Kommunikationsverbindung gelesen und beschrieben werden, ist aber geschützt gegen schreibende Zugriffe von außerhalb des besagten Moduls. Bei dem beschriebenen Verfahren werden vertrauliche Daten von einem geschützten Speicherbereich eines portablen Datenträgers ausgelesen und auf besagten geschützten Speicherbereich übertragen. Für dieses Verfahren ist neben dem ersten Datenobjekt und dem Transfermodul des Informationsverarbeitungsgerätes keine weitere Hardwarekomponente zur Erhöhung der Sicherheit vorgesehen. In einem weiteren Aspekt besagter Patentanmeldung werden die geschützten Daten zunächst von dem ersten Datenträger auf den geschützten Speicherbereich des Moduls übertragen (kontaktbehaftete Datenübertragung durch Auflegen des ersten Datenträgers auf den Lesebereich des Informationsverarbeitungsgerätes, über welchen die Daten auf den sicheren Bereich des portablen Moduls übertragen werden) und der erste Datenträger entfernt. In einem weiteren Schritt wird ein zweiter Datenträger auf den Lesebereich aufgelegt, welcher ebenfalls einen geschützten Speicherbereich aufweist, auf welchen die geschützten Daten vom geschützten Speicherbereich des Moduls übertragen werden. Dieser Aspekt betrifft also die sichere Übertragung von Daten von einem Datenobjekt auf einen weiteren mittels der gleichen Schnittstelle eines Informationsverarbeitungsgerätes.

Patentanmeldung WO/1997/022092 beschreibt ein Verfahren und zugehörigen Apparat für die getrennte Speicherung vertraulicher und nicht-vertraulicher Daten auf einer Smartcard. Während auf die nicht-vertraulichen Daten ohne Beschränkung auf eine bestimmte Benutzergruppe zugegriffen werden kann, erfordert der Zugriff auf die vertraulichen Daten eine Authentifizierung des Benutzers. Der Zugriff auf die vertraulichen Daten wird nur denjenigen Personen gestattet, welche eine Smartcard besitzen, die für die Authentifizierung des Besitzers verantwortlich ist. Nach besagtem Verfahren ist es möglich, verschiedene Benutzergruppen mit jeweils unterschiedlichen Zugriffsrechten auf die vertraulichen Daten zu definieren.

EP 1635302 beschreibt ein Gerät, welches Daten von einer Identifikationskarte eines Benutzers liest, um die Daten an ein weiteres Gerät zu transferieren, welches einen Identitätscheck des Benutzers basierend auf den gelesenen Informationen durchführt.

GB 2354612 beschreibt einen Datenspeicher für Finanztransaktionsdaten sowie ein Verfahren, welches es dem Systemadministrator ermöglicht, auf die Daten dieses Speichers zuzugreifen und diese zu ändern. Ein Smartcard Lesegerät, welches mit einem Sicherheitsmodul zusammenarbeitet, verifiziert eine Smartcard des Systemadministrators basierend auf dem Challenge-Response Verfahren, wobei kryptographische Schlüssel des Sicherheitsmoduls und der Smartcard zum Einsatz kommen. Der Administrator authentifiziert sich mittels seines Fingerabdruckes, welcher als Datei in seiner Smartcard gespeichert ist. Benutzer ohne Administratorrechte können zwar Transaktionsdaten zu dem Datenspeicher hinzufügen, diese jedoch nicht modifizieren.

FR 2765985 beschreibt ein Verfahren zur Erhöhung der Sicherheit von Smartcard Lesegeräten, das darauf beruht, die Anzahl der Aktivierungsoperationen eines Sicherheitsschaltkreises auf der Smartcard zu zählen und den Schaltkreis zu deaktivieren, wenn eine gewisse Anzahl besagterer Aktivierungsoperationen erreicht wurde. Die Karte kann erst nach einer neu-Initialisierung wieder benutzt werden.

US 2004247118 beschreibt ein Datenverarbeitungsgerät zur Authentifizierung an mehreren Datenspeichergeräten. Selbst im Falle dass Schlüssel, die von einem Teil der Datenspeichergeräte zur Authentifizierung verwendet werden verloren gehen, kann sich das in diesem Dokument beschriebene Gerät weiterhin sicher bei den anderen Datenspeichergeräten authentifizieren.

Andere Verfahren gewährleisten die Sicherheit des Datentransfers beim Zugriff auf eine Chipkarte mittels einer weiteren portablen Komponente, z.B. einer zweiten Chipkarte. EP 1630639 beschreibt beispielsweise ein kontaktloses Chipsystem und ein kontaktloses Chiplese- und Kontrollgerät, welches das Management kryptographischer Schlüssel erleichtert und sicher macht. Das System beinhaltet 1-3 "Slave"-Chips und einen "Master"-Chip, welcher einen ersten kryptographischen Schlüssel der Slave-Chips enthält. Das Chiplesegerät liest und entschlüsselt den ersten kryptographischen Schlüssel aus dem Master-Chip, um mit Hilfe dessen Daten auf den Slave-Chips zu lesen.

EP 1577824 beschreibt einen sicheren, lesenden Zugriff auf Codes, die in einem RFID Chip gespeichert sind, durch ein RFID Chip Lesegerät. Der Zugriff basiert auf Benutzerprofildaten einer Smartcard eines mobilen Gerätes.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine kontaktgebundene als auch eine kontaktlose Kommunikation mit einem Chipkarten-Terminal zulässt. Im letzteren Fall spricht man auch von so genannten Dual-Interface Chipkarten. Chipkarten-Kommunikationsprotokolle und -erfahren für kontaktlose Karten sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO) (http://www.icao.int/mrtd/download/documents/TR-PKI%20mrtds%20ICC%20read-only%20access%20v1 1.pdf)

Aus dem Stand der Technik sind ferner Verfahren bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 15 genormt sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erwartet wird.

Bei der sicheren Speicherung personenbezogener Daten in maschinenlesbaren Reisedokumenten stehen sich das Ziel der Erleichterung von Sicherheitskontrollen durch eine möglichst große Zahl staatlicher und nichtstaatlicher Organisationen und die Schutzwürdigkeit personenbezogener Daten vor unberechtigtem Auslesen gegenüber. Eine angemessene Balance zwischen beiden Anforderungen hat sowohl Unterschieden datenschutzrechtlicher Art als auch unterschiedlicher Schutzwürdigkeit einzelner Datenobjekte Rechnung zu tragen.

Aus der US 2005/0097320A1 ist ein System bekannt, welche eine Kommunikation zwischen einem Anwender und einer Institution, beispielsweise einer Bank, ermöglicht. Die Kommunikation erfolgt über ein Netzwerk. Bei jedem Zugriff des Anwenders auf das System der Institution erfolgt ein "transaction risk assessment", bei dem das Risiko der aktuellen Transaktion ermittelt wird.

Aus der US 2002/0087894 A1 ist ein ähnliches System bekannt, bei dem der Anwender selbst die Sicherheitsstufe für den Datentransfer wählt.

Der Erfindung liegt dem gegenüber die Aufgabe zu Grunde, ein weiteres Lesegerät für ein Dokument mit einem Datenspeicher zu schaffen, sowie ein Verfahren zum Lesen eines Datenobjekts aus einem Datenspeicher eines Dokuments und ein entsprechendes Computerprogrammprodukt.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Lesegerät für ein Dokument geschaffen, wobei das Dokument einen Datenspeicher zur Speicherung zumindest eines Datenobjekts aufweist. Ein externer Lesezugriff auf dieses Datenobjekt setzt die Durchführung eines kryptographischen Protokolls voraus, um beispielsweise das Datenobjekt vor unautorisierten Zugriffen zu schützen.

Das erfindungsgemäße Lesegerät hat eine erste Schnittstelle zum Auslesen einer Kennung aus einem tragbaren Datenspeicher und für den nachfolgenden externen Lesezugriff auf das Datenobjekt. Unter "externen Lesezugriff' wird erfindungsgemäß die Übertragung des Datenobjekts von dem Dokument an das Lesegerät verstanden.

Das Lesegerät hat eine zweite Schnittstelle zum Zugriff auf eine kryptographische Komponente für die Durchführung eines kryptographischen Algorithmus, wobei ein Ergebnis der Durchführung des kryptographischen Algorithmus zur Verwendung in dem kryptographischen Protokoll vorgesehen ist. Der Zugriff auf die kryptographische Komponente ist durch die Kennung geschützt.

Von besonderem Vorteil ist hierbei, dass die erste Schnittstelle sowohl zum Auslesen der Kennung aus dem tragbaren Datenspeicher als auch für den externen Lesezugriff auf das in dem Datenspeicher des Dokuments gespeicherte Datenobjekt dient. Die erste Schnittstelle wird damit einer doppelten Verwendung zugeführt und die Notwendigkeit einer Tastatur für die Eingabe der Kennung entfällt. Dies hat ferner Handhabungsvorteile und erlaubt die Implementierung eines umfassenden Sicherheitskonzepts.

Die über die erste Schnittstelle aus dem tragbaren Datenspeicher ausgelesene Kennung dient zum Schutz der kryptographischen Komponente gegen unautorisierte Verwendung. Wenn es sich beispielsweise bei der kryptographischen Komponente um eine Chipkarte handelt, beispielsweise eine so genannte Signaturkarte, so wird die Kennung über die zweite Schnittstelle an die Chipkarte übertragen, um diese frei zuschalten.

Alternativ oder zusätzlich kann es sich bei der kryptographischen Komponente zum Beispiel um einen Server-Computer handeln, mit dem das Lesegerät über die zweite Schnittstelle kommunizieren kann. Beispielsweise erfolgt die Kommunikation zwischen der zweiten Schnittstelle und dem Server-Computer über ein Netzwerk, wie zum Beispiel ein so genanntes Virtual Private Network (VPN). Zum Aufbau einer Netzwerkverbindung zu der kryptographischen Komponente ist die Eingabe der Kennung in das Netzwerk über die zweite Schnittstelle erforderlich.

Erfindungsgemäß hat das Lesegerät Mittel zur Durchführung des kryptographischen Protokolls. In diesem Fall dient die zweite Schnittstelle zur Anforderung der Durchführung eines kryptographischen Algorithmus von der kryptographischen Komponente und zum Empfang eines Ergebnisses der Durchführung des kryptographischen Algorithmus. Die Mittel zur Durchführung des kryptographischen Protokolls sind zur Generierung der Anforderung und zur Verwendung des Ergebnisses für die Durchführung des kryptographischen Protokolls ausgebildet. Vorzugsweise handelt es sich bei der kryptographischen Komponente um eine externe Einheit, wie z.B. eine Chipkarte oder einen Server-Computer, die von der zweiten Schnittstelle trennbar ist. Alternativ kann die kryptographischen Komponente auch einen integralen Bestandteil des Lesegeräts bilden und untrennbar mit der zweiten Schnittstelle verbunden sein.

Im Prinzip können erfindungsgemäß beliebige kryptographische Protokolle zum Einsatz kommen. Vorzugsweise wird ein kryptographisches Protokoll einer Sicherheitsstufe gewählt, welches dem Grad der Vertraulichkeit oder Schutzbedürftigkeit des in dem Dokument gespeicherten Datenobjekts entspricht. Beispielsweise können die folgenden kryptographischen Protokolle zum Einsatz kommen: Challenge-Response, Diffie-Hellmann auf Basis elliptischer Kurven (EC-DH) oder auf Basis endlicher Körper (klassischer DH), Fiat-Shamir, Zero-Knowledge Verfahren, Blind-Signatures.

Solche kryptographische Protokolle laufen unter Verwendung von einem oder mehreren kryptographischen Algorithmen oder Mechanismen ab. Erfindungsgemäß können im Prinzip beliebige kryptographische Algorithmen zum Einsatz kommen, wobei auch hier vorzugsweise die Auswahl des kryptographischen Algorithmus in Abhängigkeit von der Schutzbedürftigkeit des Datenobjekts erfolgt. Als kryptographische Algorithmen können beispielsweise eingesetzt werden: Symmetrische kryptographische Algorithmen, wie zum Beispiel Data Encryption Standard (DES) oder International Data Encryption Algorithm (IDEA), oder asymmetrische kryptographische Algorithmen, wie zum Beispiel Algorithmus nach Rives, Shamir und Adlemann (RSA), der elliptische Kurven Digitale Signatur Algorithms (ECDSA) oder Digital Signature Algorithm (DSA).

Diese kryptographischen Algorithmen basieren auf kryptographischem Schlüsselmaterial, welches geheim gehalten werden muss, um die Vertrauenswürdigkeit einer entsprechenden kryptographischen Überprüfung zu gewährleisten. Beispielsweise ist bei einem symmetrischen kryptographischen Algorithmus der Schlüssel (bei mehrstufigen Verfahren eventuell auch mehrere Schlüssel) geheim zu halten, während bei einem asymmetrischen kryptographischen Algorithmus, der auf einem Schlüsselpaar basiert, der private Schlüssel ("Private Key") des Schlüsselpaars geheim gehalten werden muss.

Vorzugsweise erfolgt die Durchführung des kryptographischen Algorithmus nicht durch das Lesegerät selbst, sondern durch eine separate kryptographische Komponente, mit der das Lesegerät über die zweite Schnittstelle kommunizieren kann. Das Lesegerät selbst führt also zusammen mit dem Dokument das kryptographische Protokoll aus, wohingegen der kryptographische Algorithmus, der die Verwendung eines dem Lesegerät oder dessen autorisierten Benutzer zugeordneten geheimen Schlüssels erfordert, durch die kryptographische Komponente ausgeführt wird.

Dies hat insbesondere den Vorteil, dass der geheime Schlüssel nicht in dem Lesegerät gespeichert werden muss, da dieser nicht von dem Lesegerät selbst, sondern nur von der kryptographischen Komponente für die Durchführung des kryptographischen Algorithmus benötigt wird. Dadurch wird die Vertrauenswürdigkeit der kryptographischen Überprüfung erhöht, da nicht in einer Vielzahl von Lesegeräten geheimes kryptographisches Schlüsselmaterial gespeichert werden muss. Im Gegenteil ist dieses nur in den kryptographischen Komponenten vorhanden, wo der oder die geheimen Schlüssel vor unbefugtem Zugriff besonders gesichert werden können. Nach einer Ausführungsform der Erfindung ist das Lesegerät zum Lesen des zumindest einen Datenobjekts aus einem Wert- oder Sicherheitsdokument, insbesondere einem Zahlungsmittel, einem Ausweisdokument, wie zum Beispiel einem Reisepass, Personalausweis, Visum, Führerschein oder dergleichen ausgebildet.

Bei dem Dokument kann es sich um ein papierbasiertes Dokument, wie zum Beispiel einen elektronischen Reisepass, ein Visum, und/oder eine Chipkarte, insbesondere eine so genannte Smart Card, handeln.

Erfindungsgemäß ist die erste Schnittstelle des Lesegeräts für den externen Lesezugriff auf das Datenobjekt kontaktlos ausgebildet. Beispielsweise kann diese Schnittstelle sowohl eine kontaktbehaftete als auch eine kontaktlose Kommunikation ermöglichen, das heißt, es kann sich um eine so genannte Dual-Interface Schnittstelle handeln. Insbesondere kann es sich hierbei auch um eine RFID-Schnittstelle handeln.

Erfindungsgemäß hat das Lesegerät ein kryptographisches Anwendungsprogramm zur Durchführung von zumindest einem kryptographischen Protokoll. Beispielsweise kann das Anwendungsprogramm über die zweite Schnittstelle des Lesegeräts auf die kryptographische Komponente zugreifen, um nach erfolgreicher Durchführung des kryptographischen Protokolls über die erste Schnittstelle des Lesegeräts den externen Lesezugriff auf das Datenobjekt des Dokuments durchzuführen und/oder von dort zu empfangen. Je nach dem Anwendungsgebiet kann anschließend die Ausgabe, Anzeige und / oder Weiterverarbeitung des Datenobjekts durch das Anwendungsprogramm erfolgen oder initiiert werden.

Die zweite Schnittstelle des Lesegeräts zu der kryptographischen Komponente kann beispielsweise als kontaktbehaftete, kontaktlose oder Dual-Interface Chipkarten-Schnittstelle ausgebildet sein. In diesem Fall handelt es sich bei der kryptographischen Komponente um eine Chipkarte mit einem geschützten Speicherbereich, in dem zumindest ein geheimer Schlüssel gespeichert ist, sowie einem Mikroprozessor zur Durchführung des kryptographischen Algorithmus. Über die Chipkarten-Schnittstelle und ein daran angeschlossenes Chipkarten-Lesegerät kann das Lesegerät auf die kryptographische Komponente zugreifen, um die Durchführung des kryptographischen Algorithmus anzufordern und das entsprechende Ergebnis von der kryptographischen Komponente zu empfangen. Das Chipkarten-Lesegerät kann einen integralen Bestandteil des erfindungsgemäßen Lesegeräts bilden oder als externes Gerät an das Lesegerät anschließbar sein.

Beispielsweise erfolgt der Datenaustausch zwischen dem Lesegerät und der kryptographischen Komponente über Application Protocol Data Units (APDUs). In diesem Fall kann das Lesegerät eine Anforderung zur Durchführung des kryptographischen Algorithmus in Form einer so genannten Kommando-APDU ("Command-APDU") an die kryptographische Komponente richten. Die kryptographische Komponente antwortet darauf mit einer Antwort APDU ("Response-APDU"), die das Ergebnis der Durchführung des kryptographischen Algorithmus beinhaltet.

Nach einer Ausführungsform der Erfindung ist die zweite Schnittstelle des Lesegeräts als Netzwerk-Schnittstelle ausgebildet, um als kryptographische Komponente einen externen Server-Computer zu verwenden, der sich beispielsweise in einer besonders geschützten Umgebung, insbesondere einem so genannten Trust-Center, befindet. Vorzugsweise ist der Zugriff auf die kryptographische Komponente über das Netzwerk zumindest durch die Kennung geschützt.

Nach einer weiteren Ausführungsform der Erfindung ermöglicht das Lesegerät wahlweise die Nutzung einer Chipkarte oder eines Server-Computers als kryptografische Komponente. Beispielsweise hat das Lesegerät also zweite Schnittstellen für die Kommunikation mit einer Chipkarte und für die Kommunikation über ein Netzwerk.

Beispielsweise ist das Lesegerät tragbar ausgebildet. Dies ermöglicht einen mobilen Einsatz des Lesegeräts. Bei dieser Ausführungsform ist besonders vorteilhaft, wenn die zweite Schnittstelle des Lesegeräts zur Kommunikation mit einer Chipkarte als kryptographischer Komponente ausgebildet ist, da das Lesegerät auch dann verwendet werden kann, wenn keine NetzwerkVerbindung besteht.

Erfindungsgemäß beinhaltet das Dokument optisch lesbare Daten, die zum Beispiel auf dem Dokument aufgedruckt sind. Bei den optisch lesbaren Daten kann es sich zum Beispiel um die so genannte ICAO-Zeile handeln. Das Lesegerät kann einen optischen Sensor aufweisen, der zum Erfassen dieser optisch lesbaren Daten dient.

Erfindungsgemäß werden die von dem Lesegerät optisch erfassten Daten für die Durchführung des kryptographischen Protokolls verwendet.

Erfindungsgemäß dienen die optisch erfassten Daten für die Durchführung eines Datenbankzugriffs, um für das betreffende Dokument zu ermitteln, welche Datenobjekte in dem Dokument gespeichert sind und welches die den Datenobjekten zugeordneten kryptographischen Protokolle sind. Ferner kann aus den optisch erfassten Daten ein Schlüssel abgeleitet werden, der für die Durchführung des kryptographischen Protokolls verwendet wird. Dadurch, dass die Daten des Dokuments zunächst optisch gelesen werden müssen, ist außerdem eine Basic Access Control gewährleistet.

Erfindungsgemäß ist das Lesegerät zur Durchführung von zumindest zwei verschiedenen kryptographischen Protokollen ausgebildet. Dies ermöglicht es, verschiedene Datenobjekte aus dem Dokument auszulesen, denen jeweils solche verschiedenen kryptographischen Protokolle zugeordnet sind. Beispielsweise handelt es sich bei einem der Datenobjekte um ein Gesichtsbild, während es sich bei einem weiteren Datenobjekt um die Fingerabdruckdaten eines Trägers eines elektronischen Reisepasses handelt. Da diese Datenobjekte einen unterschiedlichen Grad der Schutzbedürftigkeit aufweisen, sind den Datenobjekten dementsprechend verschiedene kryptographische Protokolle unterschiedlicher Sicherheitsstufen zugeordnet. Ein externer Lesezugriff auf eines dieser Datenobjekte durch das Lesegerät setzt also voraus, dass das dem betreffenden Datenobjekt zugeordnete kryptographische Protokoll zunächst erfolgreich durchgeführt worden ist. Nach einer Ausführungsform der Erfindung handelt es sich bei dem Dokument um ein Ausweisdokument. Ausweisdokumente können beispielsweise Chipkarten im Scheckkartenformat sein, oder aber Dokumente anderer Formate wie Reisepässe oder Visa. Insbesondere kann es sich bei dem Ausweisdokument um ein maschinenlesbares Reisedokument gemäß den ePassport-Standardisierungen der Internationalen Luftfahrtbehörde ICAO handeln. Die ICAO definiert für maschinenlesbare Reisedokumente unter der Bezeichnung Logische Datenstruktur (LDS) ein mit dem Chipkartenstandard ISO 7816-4 konformes Dateisystem sowie eine interoperable Struktur der in dem Dateisystem gespeicherten Daten.

Erfindungsgemäß findet die Kommunikation zwischen dem Lesegerät und dem Dokument kontaktlos statt, beispielsweise über eine kontaktlose Schnittstelle entsprechend den Normen ISO/IEC 14443 Teil 1 bis 4, wie sie für den Fall von maschinenlesbaren Reisedokumenten durch die ICAO gefordert wird. Um eine nicht autorisierte Beobachtung der kontaktlosen Kommunikation von dritter Seite zu verhindern, ist hierbei bevorzugterweise in der Zuordnungstabelle unterschiedlichen Datenobjekten weiterhin ein Verschlüsselungsprotokoll unterschiedlicher Sicherheitsstufe zugeordnet, gemäß dem das Lesegerät und das Dokument verschlüsselt kommunizieren. Hierbei tauschen Lesegerät und Dokument bevorzugterweise auf sichere Weise einen oder mehrere Sitzungsschlüssel aus oder führen eine beidseitige Authentisierung durch, als deren Resultat einer oder mehrere Sitzungsschlüssel zur Verfügung stehen.

Erfindungsgemäß ist die erste Schnittstelle kontaktlos ausgebildet, wobei die erste Schnittstelle zum Empfang der Kennung von dem tragbaren Datenspeicher und zum Empfang des Datenobjekts von dem Dokument über eine elektromagnetische Kopplung ausgebildet ist. In einer Ausführungsform der Erfindung ist die erste Schnittstelle als RFID-Schnittstelle zur Kommunikation mit dem tragbaren Datenspeicher und dem Dokument über ein Nahfeld ausgebildet. Die kontaktlose Ausbildung der ersten Schnittstelle vereinfacht die Handhabung des tragbaren Datenspeichers und des Dokuments. Die zweite Schnittstelle ist dagegen vorzugsweise als kontaktbehaftete Schnittstelle ausgebildet, insbesondere, wenn es sich um eine Chipkarten-Schnittstelle zum Zugriff auf eine Signaturkarte handelt. Dadurch ist eine besonders sichere Art der Kommunikation zwischen der kryptographischen Komponente und dem Lesegerät realisierbar.

Nach einer Ausführungsform der Erfindung handelt es sich bei dem tragbaren Datenträger, auf dem die Kennung gespeichert ist, um eine Chipkarte mit einer kontaktlosen Schnittstelle, insbesondere einer RFID-Schnittstelle. Eine solche Chipkarte wird im Weiteren auch als "Siegelkarte" bezeichnet. Beispielsweise hat eine Behörde ein oder mehrere der erfindungsgemäßen Lesegeräte und zumindest eine Siegelkarte. Beim morgendlichen Einschalten der Lesegeräte wird mit Hilfe der Siegelkarte der Zugriff auf die jeweilige kryptographische Komponente freigeschaltet. Die Siegelkarte kann nach der Freischaltung der kryptographischen Komponenten von den Lesegeräten entfernt werden, um sie an einem sicheren Ort, wie zum Beispiel in einem Tresor, aufzubewahren.

Beispielsweise ist die Freischaltung der kryptographischen Komponente auf eine bestimmte Zeitdauer begrenzt. Nach Ablauf dieser Zeitdauer, das heißt einen so genannten Time-Out, muss erneut die Kennung von der Siegelkarte gelesen werden, um die kryptographische Komponente wieder frei zuschalten. Dadurch ist ein besonderer Schutz gegen unbefugte Verwendung des Lesegeräts gegeben, da selbst bei einem Diebstahl des Geräts mitsamt der freigeschalteten kryptographischen Komponente eine Nutzung des Lesegeräts jedenfalls nach Ablauf der Zeitdauer nicht mehr möglich ist.

Nach einer Ausführungsform der Erfindung muss die kryptographische Komponente jedes Mal aufs Neue freigeschaltet werden, wenn diese von der zweiten Schnittstelle getrennt und danach mit der zweiten Schnittstelle wieder verbunden wird. Auch hierdurch ist ein besonderer Schutz des Lesegeräts bzw. der kryptographischen Komponente vor unbefugter Verwendung gegeben, da selbst bei einem Diebstahl sowohl der kryptographischen Komponente als auch eines Lesegeräts eine Freischaltung der kryptographischen Komponente ohne die Siegelkarte nicht möglich ist.

Beispielsweise hat das Lesegerät ein Netzteil zum Anschluss an eine elektrische Energieversorgung. Vorzugsweise ist das Lesegerät also nicht batteriebetrieben. Auch hierdurch ist ein besonderer Schutz gegen eine unberechtigte Verwendung des Lesegeräts gegeben. Bei einem Diebstahl des Lesegeräts würde dieses nämlich zwangsläufig von der elektrischen Energieversorgung getrennt werden, so dass auch wenn sich die kryptographische Komponente, das heißt beispielsweise die Signaturkarte, in dem Lesegerät befindet, zur weiteren Nutzung der kryptographischen Komponente deren erneute Freischaltung erforderlich ist. Diese Freischaltung ist aber ohne die Siegelkarte nicht möglich.

Erfindungsgemäß hat das Lesegerät eine dritte Schnittstelle zur Erfassung von optisch lesbaren Daten des Dokuments, wobei die optisch lesbaren Daten zur Verwendung in dem kryptographischen Protokoll vorgesehen sind. Beispielsweise ist die dritte Schnittstelle als CCD-Sensor oder als Scanner ausgebildet. Aus den optisch eingelesenen Daten wird zum Beispiel ein Schlüssel gebildet, der für die Durchführung des kryptographischen Protokolls verwendet wird. Nach einer Ausführungsform der Erfindung verfügt das Lesegerät über eine Anzeigevorrichtung zur Wiedergabe des zumindest einen Datenobjekts, welches aus dem Datenspeicher des Dokuments ausgelesen worden ist. Vorzugsweise ist die Anzeigevorrichtung relativ zu einer Basis des Lesegeräts beweglich angeordnet.

Beispielsweise kann sich der Träger eines Ausweisdokuments auf diese Art und Weise von der Richtigkeit der in dem Datenspeicher des Ausweisdokuments gespeicherten Daten überzeugen. Hierzu übergibt der Träger des Ausweises das Ausweisdokument an einen Mitarbeiter einer Behörde, wie zum Beispiel der zur Ausstellung solcher Ausweisdokumente autorisierten Behörde.

Der Mitarbeiter schaltet zunächst den Zugriff auf die kryptographische Komponente mit Hilfe der Siegelkarte frei, wenn dies noch nicht zuvor erfolgt ist. Danach wird der Inhalt des Datenspeichers des Dokuments ausgelesen, und der ausgelesene Inhalt, wie zum Beispiel die persönlichen Daten des Trägers des Ausweisdokuments, ein in dem Datenspeicher gespeichertes Gesichtsbild, Fingerabdrücke und / oder andere Daten, werden auf der Anzeigevorrichtung wiedergegeben, so dass sich der Träger des Ausweisdokuments von deren Richtigkeit überzeugen kann.

Dabei ist besonders vorteilhaft, wenn die Anzeigevorrichtung drehbar und / oder schwenkbar auf der Basis des Lesegeräts befestigt ist, so dass die Anzeigevorrichtung von dem Mitarbeiter der Behörde so geschwenkt werden kann, dass sie für den Träger des Ausweisdokuments gut sichtbar ist. Die ersten und zweiten Schnittstellen des Lesegeräts sind dabei vorzugsweise an der Basis so angeordnet, dass sie aus der Sitzposition des Mitarbeiters der Behörde bequem erreichbar sind.

Beispielsweise betrifft die Erfindung ein Verfahren zum Lesen zumindest eines Datenobjekts aus einem Datenspeicher eines Dokuments mit folgenden Schritten: Auslesen einer Kennung aus einem tragbaren Datenspeicher über eine erste Schnittstelle eines Lesegeräts, Freischaltung eines Zugriffs auf eine kryptographische Komponente mit Hilfe der Kennung über eine zweite Schnittstelle des Lesegeräts, wobei die kryptographische Komponente für die Durchführung eines kryptographischen Algorithmus ausgebildet ist, Durchführung eines kryptographischen Protokolls zur Freigabe eines externen Lesezugriffs durch das Dokument unter Verwendung eines Ergebnisses des kryptographischen Algorithmus und Auslesen des Datenobjekts aus dem Datenspeicher nach der Freigabe des Zugriffs.

Beispielsweise betrifft die Erfindung ferner ein Computerprogrammprodukt zur Durchführung eines solchen Verfahrens.

Im Weiteren werden bevorzugte Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Lesegeräts,
- Figur 2: ein Blockdiagramm einer zweiten Ausführungsform eines erfindungsgemäßen Lesegeräts,
- Figur 3: ein Flussdiagramm einer Ausführungsform eines erfindungsgemäßen Verfahrens,
- Figur 4: eine schematische perspektivische Ansicht einer Ausführungsform eines erfindungsgemäßen Lesegeräts.

In den nachfolgenden Figurenbeschreibungen werden einander entsprechende Elemente mit gleichen Bezugszeichen gekennzeichnet.

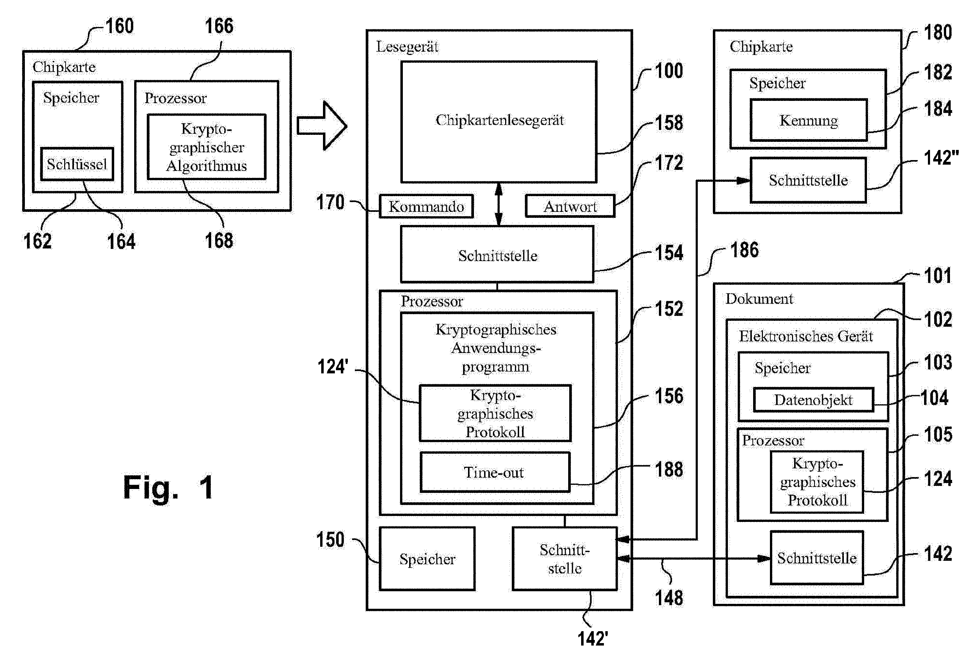

Die Figur 1 zeigt ein Lesegerät 100 für ein Dokument 101. Bei dem Dokument 101 handelt es sich beispielsweise um einen elektronischen Reisepass.

Ein elektronisches Gerät 102 ist in das Dokument 101 integriert. Bei dem elektronischen Gerät 102 kann es sich um einen integrierten elektronischen Schaltkreis handeln. Das elektronische Gerät 102 hat einen elektronischen Speicher 103 für zumindest ein Datenobjekt 104. Das Datenobjekt 104 beinhaltet schutzbedürftige Daten, beispielsweise personenbezogene und/oder biometrische Daten eines Trägers des Dokuments 101. Beispielsweise beinhaltet das Datenobjekt 104 ein Gesichtsbild, Fingerabdruckdaten und/oder Irisscan-Daten des Trägers des Dokuments 101.

Das elektronische Gerät 102 hat ferner einen Prozessor 105 zur Ausführung von Programminstruktionen 124, die die von dem elektronischen Gerät 102 auszuführenden Schritte eines kryptographischen Protokolls implementieren.

Das elektronische Gerät 102 hat eine Schnittstelle 142 zum Aufbau einer Kommunikationsverbindung 148 mit der entsprechenden Schnittstelle 142' des Lesegeräts 100 und mit einer entsprechenden Schnittstelle 142" einer Chipkarte 180. Bei der Chipkarte 180 handelt es sich um eine "Siegelkarte", die beispielsweise einer Behörde zugeordnet ist. Die Chipkarte 180 hat einen Speicher 182, in dem eine Kennung 184 gespeichert ist. Die Kennung 184 kann aus der Chipkarte 180 von dem Lesegerät 100 durch Aufbau einer Kommunikationsverbindung 186 zwischen den Schnittstellen 142' und 142" ausgelesen werden.

Die Schnittstellen 142, 142', 142" können kontaktbehaftet, kontaktlos oder als Dual-Interface ausgebildet sein. Vorzugsweise können durch die Schnittstellen 142, 142' bzw. 142" ein RFID-System gebildet werden. Die kontaktlose Ausbildung Schnittstellen 142, 142' und 142" hat den besonderen Vorteil, dass die Handhabung der Chipkarte 180 und des Dokuments 101 erleichtert wird.

Das Datenobjekt 104 ist in dem Speicher 103 geschützt gespeichert. Ein externer Lesezugriff auf das Datenobjekt 104 über die Schnittstellen 142 kann nur nach erfolgreicher Durchführung des kryptographischen Protokolls erfolgen.

Das Lesegerät 100 hat einen Speicher 150 zur Speicherung des Datenobjekts 104, nachdem dieses von der Schnittstelle 142' über die Kommunikationsverbindung 148 empfangen worden ist.

Ein Prozessor 152 des Lesegeräts 100 ist mit der Schnittstelle 142' sowie einer weiteren Schnittstelle 154 des Lesegeräts 100 verbunden. Der Prozessor 152 dient zur Ausführung eines kryptographischen Anwendungsprogramms 156, welches Programminstruktionen 124' beinhaltet, die zur Ausführung der von dem Lesegerät 100 auszuführenden Schritte des kryptographischen Protokolls dienen. Das kryptographische Anwendungsprogramm 156 kann ferner Programminstruktionen 188 beinhalten, die zur Realisierung eines Time-Outs hinsichtlich der Freischaltung der Chipkarte 160 dient. Die Realisierung des Time-Out kann jedoch auch durch eine andere Software- und Hardwarerealisierung in dem Lesegerät 100 und / oder in der Chipkarte 160 erfolgen. Die Programminstruktionen 188 sind dabei beispielsweise so ausgebildet, dass nach Ablauf einer vorgegebenen Zeitdauer nach dem letzten Freischalten der Chipkarte 160 ein erneutes Freischalten der Chipkarte 160 mit Hilfe der Chipkarte 180 verlangt wird, um weiterhin auf die Chipkarte 160 zugreifen zu können.

Bei dem kryptographischen Anwendungsprogramm 156 kann es sich beispielsweise um ein Anwendungsprogramm für die Durchführung einer Zugangskontrolle, insbesondere einer Passkontrolle oder dergleichen handeln.

In dem hier betrachteten Ausführungsbeispiel ist die Schnittstelle 154 als Chipkarten-Schnittstelle ausgebildet. Das Lesegerät 100 beinhaltet ein Chipkarten-Lesegerät 158, in das die Chipkarte 160 eingeführt werden kann. Über die Schnittstelle 154 und das Chipkarten-Lesegerät 158 kann das kryptographische Anwendungsprogramm 156 mit der Chipkarte 160 kommunizieren. Dies erfolgt beispielsweise über so genannte APDUs oder mit einem anderen Request-Response Protokoll.

Die Chipkarte 160 hat einen Speicher 162, in dem zumindest ein symmetrischer oder asymmetrischer geheimer Schlüssel 164 gespeichert ist. Der Schlüssel 164 ist in einem geschützten Speicherbereich abgelegt, so dass ein Auslesen des Schlüssels 164 aus der Chipkarte 160 nicht möglich ist.

Die Chipkarte 160 hat einen Prozessor 166 zur Ausführung von Programminstruktionen 168, die einen kryptographischen Algorithmus implementieren, wie zum Beispiel einen Algorithmus für eine symmetrische oder asymmetrische Verschlüsselung mit Hilfe des in dem Speicher 162 gespeicherten Schlüssels 164, auf den der Prozessor 166 chipkartenintern zugreifen kann.

Für die Kontrolle des Dokuments 101, beispielsweise für eine Passkontrolle, muss das Datenobjekt 104 von dem Lesegerät 100 ausgelesen werden. Hierzu wird zunächst eine Kommunikationsverbindung 186 zwischen dem Lesegerät 100, d.h. dessen Schnittstelle 142', und der Chipkarte 180 aufgebaut, so dass das Lesegerät 100 die Kennung 184 aus dem Speicher 182 der Chipkarte 180 empfängt. Das kryptographische Anwendungsprogramm 186 überträgt dann über die Schnittstelle 154 die Kennung 184 zu der Chipkarte 160, um diese frei zuschalten.

Dies hat den besonderen Vorteil, dass beispielsweise eine manuelle Eingabe einer Personal Identification Number (PIN) zur Freischaltung der Chipkarte 160 entfallen kann. Ein weiterer Vorteil ist, dass auf einer Tastatur für die Eingabe einer solchen Kennung verzichtet werden kann.

Nach der Freischaltung der Chipkarte 160 wird die Ausführung der Programminstruktionen 188 gestartet, um die Time-Out-Funktionalität zu realisieren. Ferner wird durch das kryptographische Anwendungsprogramm 156 die Ausführung des kryptographischen Protokolls gestartet, welches für das Auslesen des Datenobjekts 104 aus dem Dokument 101 erforderlich ist.

Hierzu startet das kryptographische Anwendungsprogramm 156 die Programminstruktionen 124' und überträgt ein Signal über die Schnittstelle 142' und die Kommunikationsverbindung 148 zu der Schnittselle 142 des Dokuments 101, so dass dort die entsprechenden Programminstruktionen 124 für die Durchführung des kryptographischen Protokolls gestartet werden.

Beispielsweise handelt es sich bei dem verwendeten kryptographischen Protokoll um ein Challenge-Response-Verfahren, das auf einem geheimen symmetrischen Schlüssel basiert. Dieser geheime symmetrische Schlüssel ist als Schlüssel 164 in der Chipkarte 160 gespeichert und derselbe Schlüssel ist auch für das Dokument 101 verfügbar, beispielsweise indem dieser geheime Schlüssel in einem geschützten Speicherbereich des Speichers 103 gespeichert ist.

Von den Programminstruktionen 124 wird beispielsweise eine Zufallszahl generiert. Der Prozessor 105 greift dann auf den Speicher 103 zu, um den symmetrischen geheimen Schlüssel aus dem Speicher 103 auszulesen. Mit Hilfe des symmetrischen geheimen Schlüssels wird die Zufallszahl durch die Programminstruktionen 124 verschlüsselt. Die verschlüsselte Zufallszahl wird sodann von der Schnittstelle 142 über die Kommunikationsverbindung 148 an die Schnittstelle 142' übertragen und von dem kryptographischen Anwendungsprogramm 156 empfangen.

Die Programminstruktionen 124' generieren dann ein Kommando 170, beispielsweise eine so genannte Kommando-APDU, die das von dem Dokument 101 empfangene Chiffrat, das heißt die verschlüsselte Zufallszahl, beinhaltet, sowie die Anforderung zur Entschlüsselung des Chiffrats mit Hilfe des in der Chipkarte 160 gespeicherten Schlüssels 164. Das Kommando 170 wird von dem Chipkarten-Lesegerät 158 zu der Chipkarte 160 übertragen.

Aufgrund des Kommandos 170 wird die Ausführung der Programminstruktionen 168 durch den Prozessor 166 gestartet, so dass mit Hilfe des Schlüssels 164 das mit dem Kommando 170 empfangene Chiffrat entschlüsselt wird. Die Programminstruktionen 168 generieren daraufhin eine Antwort 172, beispielsweise eine so genannte Antwort-APDU, die das Ergebnis der Entschlüsselung beinhaltet.

Die Antwort 172 wird von der Chipkarte 160 über das Chipkarten-Lesegerät 158 und die Schnittstelle 154 an das kryptographische Anwendungsprogramm 156 übertragen. Durch Ausführung der Programminstruktionen 124' wird das Ergebnis der Entschlüsselung aus der Antwort 172 ausgelesen und über die Schnittstelle 142', die Kommunikationsverbindung 148 und die Schnittstelle 142 an das Dokument 101 übertragen. Daraufhin wird durch Ausführung der Programminstruktionen 124 durch das Dokument 101 überprüft, ob das Ergebnis der Entschlüsselung mit der ursprünglich generierten Zufallszahl übereinstimmt. Wenn dies der Fall ist, muss der Schlüssel 164 mit dem symmetrischen geheimen Schlüssel des Dokuments 101, der in dem geschützten Speicherbereich des Speichers 103 gespeichert ist, übereinstimmen. In diesem Fall ist das kryptographische Protokoll erfolgreich durchgeführt worden, so dass ein externer Lesezugriff des Lesegeräts 100 auf das Datenobjekt 104 freigegeben wird.

Das Datenobjekt 104 wird dann von der Schnittstelle 142 über die Kommunikationsverbindung 148 zu der Schnittstelle 142' übertragen und von dem kryptographischen Anwendungsprogramm 156 in dem Speicher 150 gespeichert, so dass das Datenobjekt 104 auf einer Anzeige, beispielsweise einem LCD-Display des Lesegeräts 100 oder einem an das Lesegerät 100 angeschlossenen externen Display angezeigt werden kann und / oder mit weiteren Datenverarbeitungsschritten weiterverarbeitet werden kann.

Wenn es sich bei dem kryptographischen Protokoll beispielsweise um ein Challenge-Response-Verfahren basierend auf einem asymmetrischen Schlüsselpaar handelt, kann beispielsweise wie folgt vorgegangen werden:
In der Chipkarte 160 wird das Schlüsselpaar bestehend aus dem geheimen Schlüssel 164 und dem dazugehörigen öffentlichen Schlüssel abgespeichert. Die Speicherung des öffentlichen Schlüssels erfolgt in einem nicht-geschützten Speicherbereich der Chipkarte 160, der über das Chipkarten-Lesegerät 158 ausgelesen werden kann.

Zur Durchführung des kryptographischen Protokolls generieren die Programminstruktionen 124' zunächst eine Kommando-APDU zum Lesen des öffentlichen Schlüssels von der Chipkarte 160. Der öffentliche Schlüssel wird dann durch Ausführung der Programminstruktionen 124' von dem Lesegerät 100 zu dem Dokument 101 übertragen, und zwar über die Kommunikationsverbindung 148.

Die Programminstruktionen 124 erzeugen wiederum eine Zufallszahl, die mit Hilfe des öffentlichen Schlüssels verschlüsselt wird. Das daraus resultierende Chiffrat wird von dem Dokument 101 an das Lesegerät 100 über die Kommunikationsverbindung 148 übertragen. Daraufhin generieren die Programminstruktionen 124' ein Kommando 170 zur Entschlüsselung des von dem Dokument 101 empfangenen Chiffrats. Daraufhin wird das Chiffrat durch Ausführung der Programminstruktionen 168 von der Chipkarte 160 unter Verwendung des geheimen Schlüssels 164 entschlüsselt.

Durch die Programminstruktionen 168 wird eine Antwort 172 generiert, die das Ergebnis der Entschlüsselung beinhaltet. Dieses Ergebnis der Entschlüsselung wird durch Ausführung der Programminstruktionen 124' über die Kommunikationsverbindung 148 an das Dokument 101 übertragen, wo durch Ausführung der Programminstruktionen 124 das Ergebnis der Entschlüsselung mit der ursprünglich generierten Zufallszahl verglichen wird. Wenn beides übereinstimmt, war die Durchführung des kryptographischen Protokolls erfolgreich, so dass wiederum der externe Lesezugriff auf das Datenobjekt 104 durch das Dokument 101 freigegeben wird.

Nach dem Auslesen des Datenobjekts 104 aus dem Dokument 101 können nachfolgend weitere Dokumente, die ähnlich oder gleich aufgebaut sind wie das Dokument 101, mit Hilfe des Lesegeräts 100 ausgelesen werden, und zwar solange, wie die Chipkarte 160 freigeschaltet bleibt, d.h. solange die durch die Time-Out-Funktionalität gegebene maximale Zeitdauer nach dem Freischalten der Chipkarte 160 noch nicht erreicht ist. Nach Erreichung der maximalen Zeitdauer wird die Schnittstelle 154 beispielsweise von den Programminstruktionen 188 angesteuert, um die Chipkarte 160 kurzfristig elektrisch von dem Lesegerät 100 zu trennen. Daraufhin ist ein erneutes Freischalten der Chipkarte 160 mit Hilfe der Chipkarte 180 erforderlich, das heißt, es wird erneut die Kommunikationsverbindung 186 aufgebaut, um die Kennung 184 auszulesen und mit Hilfe der Kennung 184 dann die Chipkarte 160 frei zuschalten.

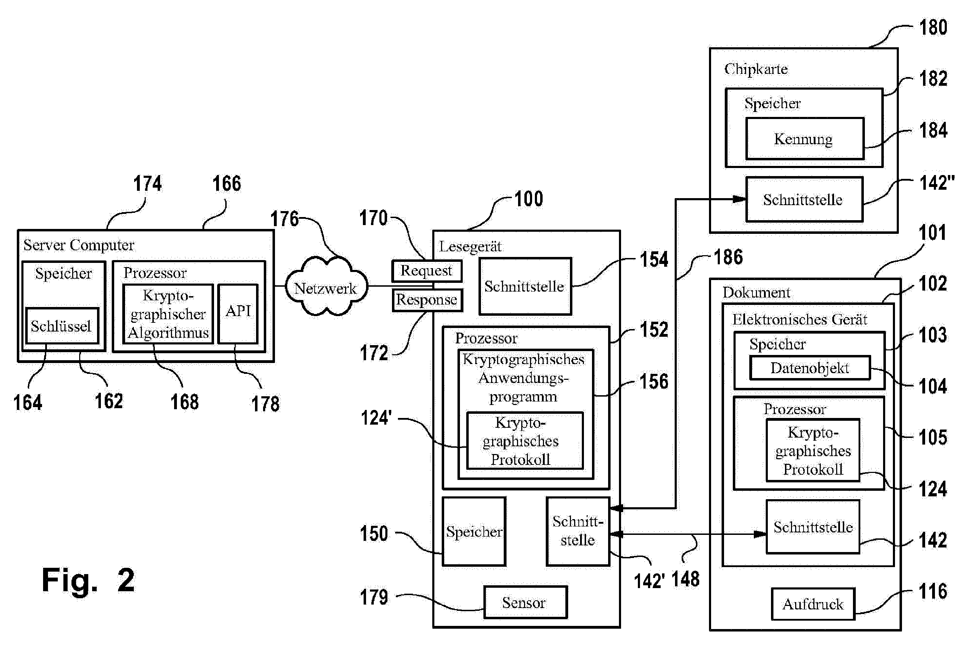

Die Figur 2 zeigt eine weitere Ausführungsform des Lesegeräts 100, wobei bei dieser Ausführungsform die Schnittstelle 154 als Netzwerk-Schnittstelle ausgebildet ist. Als kryptographische Komponente dient bei dieser Ausführungsform ein Server-Computer 174 mit dem das Lesegerät 100 über ein Netzwerk 176 kommunizieren kann. Der Server-Computer 174 kann sich beispielsweise in einem Trust-Center befinden. Die Programminstruktionen 168, die zur Ausführung eines kryptographischen Algorithmus auf einem Prozessor 166 des Server-Computers 174 dienen, können ein Application Programming Interface 178 aufweisen, welches von den Programminstruktionen 124' angesprochen werden kann.

Beispielsweise erfolgt die Kommunikation zwischen dem Lesegerät 100 und dem Server-Computer 174 über das Netzwerk 176 mit einem Request-Response Protokoll, wie zum Beispiel dem Hypertext Transfer Protocol (HTTP). Ferner kann auch das Secure Hypertext Transfer Protocol (HTTPS), eine VPN-Verbindung oder eine Kommunikation über einen anderen geschützten Netzwerk-Zugriff erfolgen.

Als Kommando 170 für die Anforderung der Durchführung des kryptographischen Algorithmus generieren die Programminstruktionen 124' bei dieser Ausführungsform also einen entsprechenden Request, den der Server-Computer 174 mit einer Antwort 172, das heißt einer "Response", beantwortet, die das Ergebnis der Durchführung des kryptographischen Algorithmus beinhaltet.

Zum Zugriff auf den Servercomputer 184 von dem Lesegerät 100 ist es zunächst erforderlich, die Kennung 184 aus der Chipkarte 180 auszulesen. Wie in der Ausführungsform der Figur 1 wird hierzu die Kommunikationsverbindung 186 zwischen den Schnittstellen 142' und 142" aufgebaut, so dass die Kennung 184 von dem Lesegerät 100 empfangen wird.

In einer Ausführungsform wird die Kennung 184 von dem kryptographischen Anwendungsprogramm 156 empfangen und über die Schnittstelle 154 und das Netzwerk 176 an den Servercomputer 174 übertragen, um diesen für die Ausführung des kryptographischen Algorithmus 168 für das Lesegerät 100 frei zuschalten. In einer weiteren Ausführungsform ist alternativ oder zusätzlich der Aufbau einer Kommunikationsverbindung zwischen dem Servercomputer 174 über das Netzwerk 176 durch die Kennung 184 geschützt. In diesem Fall handelt es sich bei dem Netzwerk 176 beispielsweise um ein so genanntes Virtual Private Network (VPN). Nur dann, wenn die Kennung 184 zutreffend ist, kann das Lesegerät 100 mit dem VPN Netzwerk 176 verbunden werden.

In einer Ausführungsform ist die Kennung 184 der Chipkarte 180 statisch und unveränderlich. In diesem Fall kann die Chipkarte 180 als eine reine Speicherkarte ausgestaltet sein. Alternativ ist die Kennung 184 veränderlich. Beispielsweise verändert sich die Kennung 184 innerhalb bestimmter zeitlicher Intervalle nach einem vorgegebenen Algorithmus. In diesem Fall ist die Chipkarte 180 als Prozessorkarte ausgebildet, wobei der Prozessor der Chipkarte 180 dann den vorgegebenen Algorithmus für die Generierung der Kennungen 184 ausführt.

In der hier betrachteten Ausführungsform der Erfindung hat das Lesegerät 100 eine weitere optische Schnittstelle, die durch einen optischen Sensor 179 gebildet wird. Der optische Sensor 179 dient zum Erfassen eines Aufdrucks 118 oder einer entsprechenden Anzeige von dem Dokument 101. Zur Durchführung des kryptographischen Protokolls wird bei dieser Ausführungsform zunächst mit Hilfe des optischen Sensors 180 der Aufdruck 116 von dem Dokument 101 gelesen und es werden die in dem Aufdruck 116 beinhalteten Daten erfasst. Mit Hilfe dieser Daten generiert der Prozessor 152 und / oder der Servercomputer 174 einen Schlüssel, der für die Durchführung des kryptographischen Protokolls verwendet wird. Beispielsweise wird aus den von dem Aufdruck 116 erfassten Daten mit Hilfe des Schlüssels 164 ein weiterer geheimer Schlüssel abgeleitet.

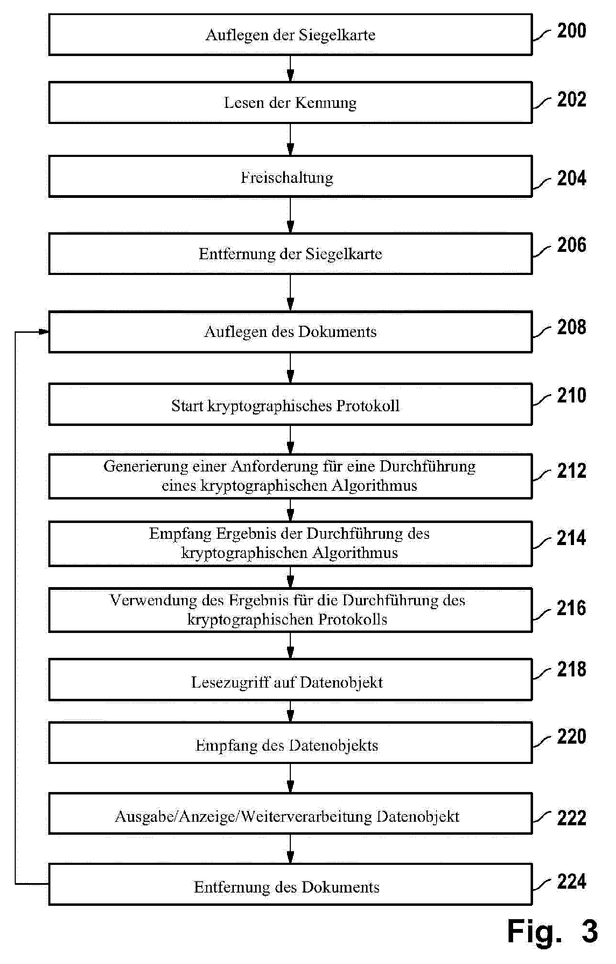

Die Figur 3 zeigt ein Flussdiagramm einer Ausführungsform eines erfindungsgemäßen Verfahrens:
Zunächst wird eine Siegelkarte, wie zum Beispiel eine Speicherchipkarte oder eine Prozessorchipkarte, mit der kontaktlosen Schnittstelle des Lesegeräts in Verbindung gebracht. Wenn die Schnittstelle als RFID-Schnittstelle ausgebildet ist, so erfolgt dies beispielsweise durch Auflegen der Siegelkarte auf ein dafür vorgesehenes Auflagefeld des Lesegeräts. Durch elektromagnetische Kopplung zwischen dem Lesegerät und der Siegelkarte wird dann die Kennung aus der Siegelkarte in dem Schritt 202 ausgelesen.

In dem Schritt 204 nutzt das Lesegerät die Kennung zur Freischaltung eines Zugriffs auf die kryptographische Komponente, das heißt beispielsweise einer Signaturkarte oder eines externen Servercomputers bzw. zur Einwahl in ein geschütztes Netzwerk, wie zum Beispiel ein VPN, um über das geschützte Netzwerk auf die externe kryptographische Komponente zugreifen zu können. Nach der Freischaltung wird die Siegelkarte in dem Schritt 206 von dem Lesegerät entfernt. Beispielsweise wird die Siegelkarte an einem sicheren Ort aufbewahrt, um sie vor Diebstahl oder unautorisierter Benutzung zu schützen.

In dem Schritt 208 wird ein Dokument mit der kontaktlosen Schnittstelle des Lesegeräts in Verbindung gebracht, indem dieses beispielsweise auf die dafür vorgesehene Auflagefläche des Lesegeräts aufgelegt wird.

In dem Schritt 210 wird eine Kommunikationsverbindung zwischen dem Lesegerät und dem Dokument aufgebaut. Beispielsweise sendet das Lesegerät über die Kommunikationsverbindung ein Signal, durch welches das kryptographische Protokoll gestartet wird. In Abhängigkeit von dem verwendeten kryptographischen Protokoll erhält das Lesegerät daraufhin von dem Dokument Daten für die Durchführung des kryptographischen Protokolls, wie zum Beispiel eine verschlüsselte Zufallszahl zur Anwendung in einem Challenge-Response-Verfahren.

In dem Schritt 212 generiert das Lesegerät eine Anforderung für eine Durchführung eines kryptographischen Algorithmus, wie zum Beispiel zur Entschlüsselung der von dem Dokument erhaltenen Daten mit Hilfe eines geheimen Schlüssels. Diese Anforderung wird von dem Lesegerät an eine externe kryptographische Komponente übertragen, wie zum Beispiel eine Chipkarte (vgl. die Ausführungsform der Figur 1) oder einen Server-Computer (vgl. die Ausführungsform der Figur 2).

Nach Empfang der Anforderung führt die kryptographische Komponente den kryptographischen Algorithmus aus. Beispielsweise entschlüsselt die kryptographische Komponente die von dem Lesegerät mit der Anforderung empfangenen Daten, wobei der in der kryptographischen Komponente gespeicherte geheime Schlüssel verwendet wird. Die kryptographische Komponente generiert eine Antwort auf die Anforderung, welche das Ergebnis der Durchführung des kryptographischen Algorithmus beinhaltet. Diese Antwort mit dem Ergebnis empfängt das Lesegerät von der kryptographischen Komponente in dem Schritt 214.

In dem Schritt 216 verwendet das Lesegerät und / oder das Dokument das Ergebnis der Durchführung des kryptographischen Algorithmus, das in dem Schritt 214 empfangen worden ist, für die weitere Durchführung des kryptographischen Protokolls.

Bei Verwendung einer Zufallszahl für ein Challenge-Response-Verfahren überträgt beispielsweise das Lesegerät das Ergebnis der Entschlüsselung an das Dokument, welches daraufhin das Ergebnis der Entschlüsselung mit der ursprünglich generierten Zufallszahl vergleicht.

Nach erfolgreicher Durchführung des kryptographischen Protokolls erfolgt in dem Schritt 218 ein Lesezugriff auf das in dem geschützten Speicherbereich des Dokuments gespeicherte Datenobjekt und dessen Übertragung an das Lesegerät über die Kommunikationsverbindung. Dieser Lesezugriff kann unmittelbar von dem Lesegerät oder von dem Dokument selbst ausgeführt werden.

In dem Schritt 220 empfängt das Lesegerät dieses Datenobjekt. Je nach Anwendungsfall wird das Datenobjekt beispielsweise auf einer Anzeige des Lesegeräts, zum Beispiel einem LCD-Display oder einem Bildschirm, ausgegeben.

Wenn es sich bei dem Datenobjekt beispielsweise um ein Gesichtsbild handelt, so wird das Gesichtsbild auf einem Bildschirm angezeigt, so dass die Übereinstimmung des angezeigten Gesichtsbildes mit einem auf dem Dokument aufgedrucktem Passbild überprüft werden kann. Alternativ oder zusätzlich wird das Datenobjekt mit einem entsprechenden, in einer Datenbank abgespeicherten Referenzobjekt verglichen.

Wenn es sich bei dem Datenobjekt um Fingerabdruckdaten, Irisscan-Daten oder andere biometrische Daten handelt, so können diese für die Überprüfung der entsprechenden biometrischen Eigenschaften des Trägers des Dokuments herangezogen werden. Hierzu kann an das Lesegerät eine entsprechende Vorrichtung zur Erfassung der betreffenden biometrischen Daten angeschlossen sein, beispielsweise also ein Fingerabdruck- oder Irisscanner.

Die eingescannten biometrischen Daten des Trägers des Dokuments werden von dem Lesegerät mit den in dem Datenobjekt beinhalteten biometrischen Daten auf Übereinstimmung geprüft, um die Authentizität des Dokuments sicherzustellen.

Danach kann das Dokument von dem Lesegerät entfernt werden (Schritt 224). Um ein weiteres Dokument auszulesen, wird zu dem Schritt 208 zurückgegangen, um die Schritte 210 bis 212 zum Auslesen des weiteren Dokuments erneut durchzuführen. Dieser Vorgang kann für verschiedene Dokumente, solange wiederholt werden, wie die kryptographische Komponente freigeschaltet bleibt.

Beispielsweise bleibt die kryptographische Komponente für eine vorgegebene maximale Zeitdauer freigeschaltet. Alternativ oder zusätzlich ist eine Freischaltung der kryptographischen Komponente nach jedem Einschalten des Lesegeräts und / oder jeder Trennung der kryptographischen Komponente von der zweiten Schnittstelle des Lesegeräts erforderlich.

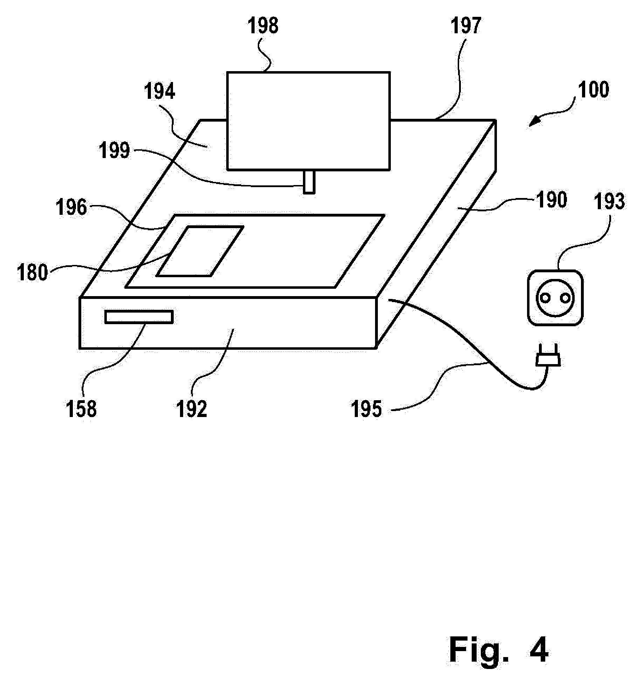

Die Figur 4 zeigt in perspektivischer Ansicht eine Ausführungsform eines erfindungsgemäßen Lesegeräts 100. Das Lesegerät 100 hat eine Basis 190, die das Chipkartenlesegerät 158 beinhaltet. Von einer Stirnseite 192 der Basis 190 kann die Chipkarte (vgl. Chipkarte 160 der Figur 1) in das Chipkartenlesegerät 158 eingeschoben werden.

Auf der Oberseite 194 der Basis 190 ist eine Auflagefläche 196 ausgebildet. Die Auflagefläche 196 gehört zu der Schnittstelle des Lesegeräts, die zur Kommunikation mit der Siegelkarte und dem Dokument dient (vgl. Schnittstelle 142' der Figuren 1 und 2). In der hier betrachteten Ausführungsform ist die Schnittstelle als kontaktlose Schnittstelle ausgebildet, beispielsweise als RFID-Schnittstelle.

Auf der Oberseite 194 ist ferner eine Anzeigevorrichtung 198, wie zum Beispiel ein TFT-Flachbildschirm, eine LCD-Anzeige oder dergleichen um eine Achse 199 drehbar befestigt. Die Anzeigevorrichtung 198 dient zur Wiedergabe der aus dem Dokument (vgl. Dokument 101 der Figuren 1 und 2) ausgelesenen Datenobjekte. Die Anzeigevorrichtung 198 ist so um die Achse 199 drehbar, dass sie von der Rückseite 197 des Lesegeräts 100 her gut sichtbar ist.

Um die Handhabung des Lesegeräts 100 zu erleichtern, ist die Achse 199 von der Stirnseite 192 aus betrachtet hinter der Auflagefläche 196 angeordnet, so dass z.B. ein Mitarbeiter der Ausweisbehörde die Auflagefläche und das Chipkartenlesegerät 158 bequem aus seiner Sitzposition erreichen kann, wenn sich dieser gegenüber der Stirnseite 192 befindet. Ein dem Mitarbeiter auf der anderen Seite des Lesegeräts gegenüber sitzender Bürger, d.h. beispielsweise der Träger des Ausweises, kann gleichzeitig bequem die Anzeigevorrichtung 198 betrachten, um die dort wiedergegebenen Daten zu Kenntnis zu nehmen.

Das Lesegerät 100 hat ein Netzteil, das an ein Kabel 195 angeschlossen ist, um das Lesegerät über eine Steckdose 193 mit elektrischer Energie zu versorgen.

Nach der Verbindung des Lesegeräts 100 mit der Steckdose 193 bzw. nach Einschalten des Lesegeräts 100 wird wie folgt vorgegangen: Eine Signaturkarte (vgl. die Chipkarte 160 der Figur 1) wird in das Chipkartenlesegerät 158 zum Beispiel durch einen Mitarbeiter einer Ausweisbehörde von der Stirnseite 192 her in das Chipkartenlesegerät 158 eingeführt. Der Mitarbeiter der Ausweisbehörde legt dann die Chipkarte 180, das heißt die so genannte Siegelkarte, auf die Auflagefläche 196. Daraufhin liest das Lesegerät 100 die in der Chipkarte 180 gespeicherte Kennung, und verwendet diese zur Freischaltung der Signaturkarte.

Die Chipkarte 180 wird daraufhin von der Auflagefläche 196 entfernt und von dem Mitarbeiter der Ausweisbehörde an einen gesicherten Aufbewahrungsort zurückgebracht.

Nach der Freischaltung der Signaturkarte ist das Lesegerät 100 für das Lesen von Dokumenten, insbesondere Ausweisdokumenten (vgl. Dokument 101 der Figuren 1 und 2) bereit. Hierzu wird ein solches Dokument auf die Auflagefläche 196 aufgelegt, so dass die Kommunikationsverbindung 148 (vgl. Figuren 1 und 2) mit dem Lesegerät 100 hergestellt werden kann.

Falls das Lesegerät 100 ohne die Signaturkarte entwendet wird, so kann dies von einem hierzu nicht autorisierten Dritten nicht zum Lesen von Dokumenten verwendet werden, da dem Dritten sowohl die hierfür erforderliche Signaturkarte als auch die Siegelkarte fehlen. Selbst wenn das Lesegerät 100 zusammen mit der Signaturkarte entwendet wird, kann ein Dritter dennoch nicht das Lesegerät unautorisiert benutzen. Durch die Entwendung des Lesegeräts 100 wird dieses ja zwangsläufig von der elektrischen Energieversorgung getrennt, so dass beim erneuten Einschalten des Lesegeräts 100 die Siegelkarte, das heißt die Chipkarte 180, erforderlich ist, um die Signaturkarte frei zuschalten.

### Bezugszeichenliste

- 100: Lesegerät
- 101: Dokument
- 102: elektronisches Gerät
- 103: Speicher
- 104: Datenobjekt
- 105: Prozessor
- 106: Zuordnungstabelle
- 108: kryptographisches Protokoll
- 109: Verschlüsselungsprotokoll
- 110: Softwareanwendung
- 112: Betriebssystem
- 116: Aufdruck
- 118: öffentlicher Schlüssel
- 120: privater Schlüssel
- 122: digitale Signatur
- 124, 124': Programminstruktionen
- 125, 125': Programminstruktionen
- 128, 128': Empfänger
- 130,130': Sender
- 140: Administratorfunktion
- 142, 142', 142": Schnittstelle
- 146, 146': Generalschlüssel
- 148: Kommunikationsverbindung
- 150: Speicher
- 152: Prozessor
- 154: Schnittstelle
- 156: kryptographisches Anwendungsprogramm
- 158: Chipkarten-Lesegerät
- 160: Chipkarte
- 162: Speicher
- 164: Schlüssel
- 166: Prozessor
- 168: Programminstruktionen
- 170: Kommando
- 172: Antwort
- 174: Server-Computer
- 176: Netzwerk
- 178: Application Programming Interface (API)
- 179: Sensor
- 180: Chipkarte ("Siegelkarte")
- 182: Speicher
- 184: Kennung
- 186: Kommunikationsverbindung
- 188: Programminstruktionen
- 190: Basis
- 192: Stirnseite
- 193: Steckdose
- 194: Oberseite
- 195: Kabel
- 196: Auflagefläche
- 197: Rückseite
- 198: Anzeigevorrichtung
- 199: Achse

## Patentansprüche

1. Lesegerät mit einem Dokument (101), wobei das Dokument einen Prozessor (105) zur Ausführung von Programminstruktionen (124) von Schritten eines kryptographischen Protokolls umfasst sowie einen Datenspeicher (103) zur geschützten Speicherung verschiedener Datenobjekte (104), denen jeweils verschiedene kryptographische Protokolle zugeordnet sind, wobei ein externer Lesezugriff auf eines dieser Datenobjekte durch das Lesegerät voraussetzt, dass das dem betreffenden Datenobjekt zugeordnete kryptographische Protokoll zunächst erfolgreich durchgeführt worden ist, wobei es sich bei dem Dokument insbesondere um ein Ausweisdokument, ein Visum oder einen Führerschein handelt, wobei das Lesegerät umfasst:
- eine erste Schnittstelle (142') zum Auslesen einer Kennung (184) aus einem tragbaren Datenspeicher (180),
- einen Prozessor (152),
- ein kryptographisches Anwendungsprogramm (156) zur Ausführung durch den Prozessor (152), wobei das Anwendungsprogramm (156) weitere Programminstruktionen (124') zur Durchführung des kryptographischen Protokolls beinhaltet und wobei das Anwendungsprogramm (156) dazu geeignet ist, die Ausführung desjenigen der kryptographischen Protokolle auf dem Lesegerät (100) und dem Dokument (101) zu starten, dessen erfolgreiche Durchführung Voraussetzung für den externen Lesezugriff ist, wobei ein Signal über die erste Schnittstelle (142') vom Lesegerät zu einer der ersten Schnittstelle entsprechenden Schnittstelle (142) des Dokuments übertragen wird und wobei das Signal geeignet ist, auf dem Dokument die Ausführung der entsprechenden Programminstruktionen (124) für die Durchführung des kryptographischen Protokolls zu starten,
- eine zweite Schnittstelle (154) zum Zugriff auf eine kryptographische Komponente (160; 174) für die Durchführung eines kryptographischen Algorithmus durch einen Prozessor (166) der kryptographischen Komponente, wobei ein Ergebnis (172) der Durchführung des kryptographischen Algorithmus zur Verwendung in dem kryptographischen Protokoll vorgesehen ist, und wobei der Zugriff auf die kryptographische Komponente durch die Übertragung der Kennung (184) über die zweite Schnittstelle (154) freigeschaltet werden kann, wobei die zweite Schnittstelle zur Anforderung (170) der Durchführung des kryptographischen Algorithmus (168) und zum Empfang (172) des Ergebnisses der Durchführung des kryptographischen Algorithmus ausgebildet ist, und wobei die weiteren Programminstruktionen (124') zur Generierung der Anforderung und zur Verwendung des Ergebnisses für die Durchführung des kryptographischen Protokolls ausgebildet sind,
wobei die erste Schnittstelle (142') auch für den externen Lesezugriff auf das Datenobjekt (104) ausgebildet ist, und
wobei die erste Schnittstelle zum Empfang der Kennung von dem tragbaren Datenspeicher und zum Empfang des Datenobjekts von dem Dokument über elektromagnetische Kopplung, insbesondere als RFID-Schnittstelle, ausgebildet ist; und
- eine dritte Schnittstelle (179) zur Erfassung von optisch lesbaren Daten (116) des Dokuments, wobei die optisch lesbaren Daten zur Verwendung in dem kryptographischen Protokoll vorgesehen sind , wobei die optisch erfassten Daten für die Durchführung eines Datenbankzugriffs dienen, um für das Dokument zu ermitteln, welche Datenobjekte in dem Dokument gespeichert sind und welches die den Datenobjekten zugeordneten kryptographischen Protokolle sind.

2. Lesegerät mit dem Dokument (101) nach Anspruch 1, wobei es sich bei der kryptographischen Komponente um eine Chipkarte (160) handelt, und wobei die Kennung zum Freischalten der Chipkarte vorgesehen ist.

3. Lesegerät mit dem Dokument (101) nach einem der vorhergehenden Ansprüche, wobei die zweite Schnittstelle zum Aufbau einer gesicherten Netzwerkverbindung zu der kryptographischen Komponente ausgebildet ist, wobei die Sicherung mit Hilfe der Kennung erfolgt.

4. Lesegerät mit dem Dokument (101) nach einem der vorhergehenden Ansprüche, wobei die zweite Schnittstelle einen Auflagebereich (196) zur Auflage des tragbaren Datenspeichers (180) und des Dokuments (101) aufweist.

5. Lesegerät mit dem Dokument (101) nach einem der vorhergehenden Ansprüche, wobei nach Trennung der kryptographischen Komponente von der zweiten Schnittstelle ein erneutes Auslesen der Kennung aus dem tragbaren Datenspeicher über die erste Schnittstelle erforderlich ist, um einen erneuten Zugriff auf die kryptographische Komponente zu ermöglichen.

6. Lesegerät mit dem Dokument (101) nach einem der vorhergehenden Ansprüche, wobei es sich bei dem Dokument um eine Chipkarte handelt.

7. Lesegerät mit dem Dokument (101) nach einem der vorhergehenden Ansprüche, mit einer Anzeigevorrichtung (198) zur Wiedergabe des zumindest einen Datenobjekts.

8. Lesegerät mit dem Dokument (101) nach Anspruch 7, wobei die Anzeigevorrichtung zwischen dem Auflagebereich (196) und einer Rückseite (197) der Basis angeordnet ist.

## Claims

1. A read device comprising a document (101), the document comprising a processor (105) for executing program instructions (124) of steps of a cryptographic protocols and a data memory (103) for storing, in a protected manner, different data objects (104) which are each assigned different cryptographic protocols, an external read access to one of these data objects by the read device requiring that the cryptographic protocol assigned to the data object in question was initially successfully executed, the document in particular being an identification document, a visa or a driver's license, wherein the read device comprises:
- a first interface (142') for reading an identifier (184) from a portable data memory (180);
- a processor (152);
- a cryptographic application program (156) to be executed by the processor (152), the application program (156) comprising further program instructions (124') for executing the cryptographic protocol, and the application program (156) being suitable for launching the execution of that of the cryptographic protocols on the read device (100) and the document (101) whose successful execution is a requirement for the external read access, a signal being transmitted via the first interface (142') from the read device to an interface (142) of the document corresponding to the first interface, and the signal being suitable for launching the execution of the corresponding program instructions (124) on the document for executing the cryptographic protocol;
- a second interface (154) for accessing a cryptographic component (160; 174) for the execution of a cryptographic algorithm by a processor (166) of the cryptographic component, a result (172) of the execution of the cryptographic algorithm being provided for use in the cryptographic protocol, and the access to the cryptographic component being enablable by transmitting the identifier (184) via the second interface (154), the second interface being designed to request (170) the execution of the cryptographic algorithm (168) and to receive (172) the result of the execution of the cryptographic algorithm, and the further program instructions (124') being designed to generate the request and to use the result for executing the cryptographic protocol,
wherein the first interface (142') is also designed for the external read access to the data object (104), and
wherein the first interface is designed to receive the identifier from the portable data memory and to receive the data object from the document by way of electromagnetic coupling, and in particular as an RFID interface, and
- a third interface (179) for detecting optically readable data (116) of the document, the optically readable data being provided for use in the cryptographic protocol, the optically detected data being used to carry out a database access so as to ascertain for the document which data objects are stored in the document and which are the cryptographic protocols assigned to the data objects.

2. The read device comprising the document (101) according to claim 1, wherein the cryptographic component is a chip card (160), and the identifier is provided for enabling the chip card.

3. The read device comprising the document (101) according to any one of the preceding claims, wherein the second interface is designed to establish a secure network connection to the cryptographic component, the securing taking place with the aid of the identifier.

4. The read device comprising the document (101) according to any one of the preceding claims, wherein the second interface comprises a supporting region (196) for supporting the portable data memory (180) and the document (101).

5. The read device comprising the document (101) according to any one of the preceding claims, wherein, after the cryptographic component has been separated from the second interface, another read-out of the identifier from the portable data memory via the first interface is needed to allow renewed access to the cryptographic component.

6. The read device comprising the document (101) according to any one of the preceding claims, wherein the document is a chip card.

7. The read device comprising the document (101) according to any one of the preceding claims, comprising a display device (198) for displaying the at least one data object.

8. The read device comprising the document (101) according to claim 7, wherein the display device is disposed between the supporting region (196) and a back side (197) of the base.

## Revendications

1. Lecteur avec un document (101), où le document comprend un processeur (105) pour l'exécution d'instructions d'un programme (124) d'étapes d'un protocole cryptographique ainsi qu'une mémoire de données (103) pour le stockage sécurisé de divers objets de données (104), auxquels sont chaque fois associés divers protocoles cryptographiques, où un accès en lecture externe concernant un de ces objets de données par le lecteur est conditionné à ce que le protocole cryptographique associé à l'objet de données en question est d'abord exécuté avec succès, où, dans le cas du document, il s'agit en particulier d'un document d'identité, d'un visa ou d'un permis de conduire, où le lecteur comprend :
- une première interface (142') pour la lecture d'un identifiant (184) à partir d'une mémoire de données portative (180),
- un processeur (152),
- un programme d'application cryptographique (156) pour l'exécution par le processeur (152), où le programme d'application (156) contient d'autres instructions de programme (124') pour l'exécution du protocole cryptographique et lequel, dans la mesure où le programme d'application (156) y est approprié, démarre l'exécution du protocole cryptographique en question sur le lecteur (100) et le document (101), dont l'exécution couronnée de succès est une condition préalable à l'accès en lecture externe, où un signal est transmis par l'intermédiaire de la première interface (142') du lecteur vers une interface (142) du document correspondant à la première interface et où le signal est approprié pour démarrer sur le document l'exécution des instructions de programme (124) correspondantes pour l'exécution du protocole cryptographique,
- une deuxième interface (154) pour l'accès à une composante cryptographique (160 ; 174) pour l'exécution d'un algorithme cryptographique par le processeur (166) de la composante cryptographique, où le résultat (172) de l'exécution de l'algorithme cryptographique est prévue pour l'utilisation dans le protocole cryptographique, et où l'accès à la composante cryptographique peut être libéré par la transmission de l'identifiant (184) par l'intermédiaire de la deuxième interface (154), où la deuxième interface est conçue pour la requête (170) de l'exécution de l'algorithme cryptographique (168) et pour la réception (172) du résultat de l'exécution de l'algorithme cryptographique, et où les autres instructions de programme (124') sont conçues pour la génération de la requête et pour l'utilisation du résultat pour l'exécution du protocole cryptographique,
où la première interface (142') est également conçue pour l'accès en lecture externe à l'objet des données (104), et
où la première interface est conçue pour la réception de l'identifiant de la mémoire de données portative et pour la réception de l'objet de données du document par l'intermédiaire d'un couplage électromagnétique, notamment sous la forme d'interface RFID ; et
- une troisième interface (179) pour la saisie de données lisibles optiquement (116) du document, où les données lisibles optiquement sont prévues pour l'utilisation dans le protocole cryptographique, où les données saisies optiquement servent à l'exécution d'un accès à une banque de données, afin de déterminer, pour le document, quels objets de données sont stockés dans le document et quels sont les protocoles cryptographiques associés aux objets de données.

2. Lecteur avec le document (101) selon la revendication 1, où, dans le cas de la composante cryptographique, il s'agit d'une carte à puce (160), et où l'identifiant est prévu pour commander la libération de la carte à puce.

3. Lecteur avec le document (101) selon l'une des revendications précédentes, où la deuxième interface est conçue pour l'établissement d'une liaison réseau sécurisée vers la composante cryptographique, où la sécurisation est réalisée à l'aide de l'identifiant.

4. Lecteur avec le document (101) selon l'une des revendications précédentes, où la deuxième interface présente une zone de support (196) pour le dépôt de la mémoire de données portative (180) et du document (101).

5. Lecteur avec le document (101) selon l'une des revendications précédentes, où, après la séparation de la composante cryptographique de la deuxième interface, une nouvelle lecture de l'identifiant est nécessaire à partir de la mémoire de données portative par l'intermédiaire de la première interface, afin de rendre un nouvel accès à la composante cryptographique possible.

6. Lecteur avec le document (101) selon l'une des revendications précédentes, où, dans le cas du document, il s'agit d'une carte à puce.

7. Lecteur avec le document (101) selon l'une des revendications précédentes, avec un dispositif d'affichage (198) pour la reproduction de l'au moins un objet de données.

8. Lecteur avec le document (101) selon la revendication 7, où le dispositif d'affichage est disposé entre la zone de support (196) et une face arrière (197) de la base.
